# EUROPÄISCHE PATENTANMELDUNG

(11) **EP 1 777 474 A2**
(43) Veröffentlichungstag der Anmeldung: **25.04.2007**
(21) Anmeldenummer: 06021558.9
(22) Anmeldetag: 13.10.2006
(51) Int. Cl.: F25B 30/04, F25B 15/04, F25B 15/10

(54) **Absorptions- oder Diffusionsabsorptionsanlage**

(30) Priorität: 20.10.2005 DE 102005050211
(71) Anmelder: ROBERT BOSCH GMBH, 70442 Stuttgart (DE)
(72) Erfinder: Vloon, Paulus Jakobus, 7422 RM Deventer (NL); Hijenga, Sipco Max, Diepenveen (NL)

(57) **Zusammenfassung**

Die Erfindung betrifft eine Absorptions- oder Diffusionsabsorptionswärmepumpe mit einem Kälte- oder Lösungsmittelkreislauf (1), insbesondere unter Verwendung eines Stoffpaares mit Ammoniak (NH₃) als Kältemittel und Wasser als Lösungsmittel, einem Kocher (2), einem Kondensator (3) für Ammoniakdampf, einem Verdampfer (4) sowie einem Absorber (6).

Mit der Erfindung soll eine Absorptions- oder Diffusionsabsorptionswärmepumpe im Hinblick auf das Erreichen von Vorlauftemperaturen auf einem für Heizungsanlagen üblichen Temperaturniveau sowie das Senken von Investitionskosten optimiert werden.

Die Erfindung ist gekennzeichnet durch einen zusätzlichen Kondensator (9). Dieser ist im Kälte- oder Lösungsmittelkreislauf (1) hinter dem Kocher (2) eingebaut und dient als Wärmeübertrager für einen Heizkreislauf. Eine Bypassleitung (10) verbindet die Austrittsseite mit der Eintrittsseite des Kochers (2).

## Beschreibung

Die Erfindung betrifft eine Absorptions- oder Diffusionsabsorptionswärmepumpe nach dem Oberbegriff des Patentanspruches 1.

Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozess setzt sich das Ammoniak-Wasser-Gemisch bei Wärmezufuhr durch Temperatur- und Konzentrationsunterschiede in Bewegung.

Die Wärmezufuhr erfolgt in einem Kocher. Durch Sieden werden Gasblasen aus der NH₃-reichen Lösung ausgetrieben. Der Wasseranteil in diesem Gasstrom wird in einem Rektifikator abgeschieden bzw. zurückgeführt, so dass fast nur NH₃-Dampf zum Kondensator strömt. Dabei muss die Gasblasenpumpe so ausgebildet sein, dass sie die Flüssigkeit auf eine erhebliche Höhe pumpt, um die nötige Auftriebshöhe zu erzeugen. Der hochreine Ammoniakdampf kondensiert und gibt dabei die Kondensationswärme an Heizungswasser ab. Anschließend strömt das flüssige Ammoniak nach unten in den Verdampfer. In der Helium-Ammoniak-Atmosphäre verdampft das Ammoniak unter Aufnahme von Umgebungsenergie. Danach gelangt das Gasgemisch durch einen Gas-Gas-Wärmetauscher und strömt zum Absorber, wo das gasförmige Ammoniak von der NH₃-armen Ammoniak-Wasser-Lösung absorbiert wird und die Absorptionswärme an Heizungswasser abgibt, bevor der geräuschfreie Prozess wieder neu beginnt.

Sowohl die EP 0 413 791 B1 als auch die EP 0 419 606 B1 zeigen eine Diffusionsabsorptionsanlage mit den einzelnen Aggregaten. Diese sind jeweils als separate Bauteile ausgeführt und über Leitungen miteinander verbunden. Weil der Arbeitsdruck bei derartigen Anlagen mehr als 20 bar beträgt, müssen alle Aggregate und Leitungen entsprechend druckfest gestaltet sein.

Der Prozess bei Absorptionswärmepumpen gleicht im Wesentlichen dem bei Diffusionsabsorptionsanlagen. Der Unterschied liegt in der Art der Druckabsenkung im Niederdruckteil mit Verdampfer und Absorber. Im Hochdruckteil mit Kocher und Kondensator sind die physikalischen Prozesse ähnlich, die Bauweise der Kocher ist aber jeweils unterschiedlich.

Bei Absorptionswärmepumpen erfolgt daher die NH₃-Druckänderung zwischen Hoch- und Niederdruckteil durch eine Flüssigkeitspumpe in der reichen Lösung und Ventile in der armen Lösung. Das NH₃ liegt in diesem Bereich in flüssiger Form vor und es wird der statische Druck geändert. Dagegen erfolgt die NH₃-Druckänderung zwischen Hoch- und Niederdruckteil bei Diffusionsabsorptionsanlagen durch Helium in einem Inertgaskreislauf. Dieses senkt nicht den statischen Druck, dafür aber den Partialdruck im Niederdruckteil. Je niedriger der NH₃-Gehalt ist, desto geringer wird dabei der NH₃-Druck im Niederdruckteil. Der statische Druck ist hierbei überall 20 bar

Üblicherweise soll mit Heizungsanlagen einerseits der Wärmebedarf für die Beheizung von Räumen und andererseits der Warmwasserbedarf gedeckt werden. Sobald dabei bisher eine gasbeheizte Diffusionsabsorptionsanlage als Wärmepumpe zum Einsatz kam, mussten besondere Vorkehrrungen für die Einbindung in ein Heizsystem getroffen werden, um dem durch den bekannten Aufbau des Wärmepumpenkreislaufs verhältnismäßig niedrigen Temperaturniveau bei der Wärmeauskopplung aus dem Kreisprozess gerecht zu werden. Begrenzt ist die maximale Vorlauftemperatur beispielsweise bei bekannten Wärmepumpen-Aggregaten durch den maximal zulässigen Systemdruck und die maximal zulässigen Kochertemperaturen. Weiterhin ist die maximale Leistung von bekannten Diffusionsabsorptionsanlagen durch die Abmessung der für den Absorptionsprozess wesentlichen Bauteile und die maximal zulässigen Kochertemperaturen begrenzt.

Man hat daher gasbeheizte Diffusionsabsorptionsanlagen bisher mit einem ebenfalls gasbefeuerten Heizgerät, insbesondere mit Brennwertnutzung, kombiniert. Dies diente zu Spitzenlastabdeckung, nämlich für hohe Wärmeanforderungen und auch zur Sicherstellung von höheren Vorlauftemperaturen, beispielsweise zur Warmwasserbereitung im Durchlaufverfahren oder zur zeitlich begrenzten Aufladung eines Warmwasserspeichers. Problematisch sind allerdings für derartige Kombinationen aus Diffusionsabsorptionsanlage und Heizgerät die hohen Investitionskosten, welche sich durch die doppelt vorhandene Technik, zum Beispiel Regelgerät, Sensoren, Pumpen und Brenner ergeben.

Der Erfindung liegt die Aufgabe zugrunde, eine Absorptions- oder Diffusionsabsorptionswärmepumpe im Hinblick auf das Erreichen von Vorlauftemperaturen auf einem für Heizungsanlagen üblichen Temperaturniveau sowie das Senken von Investitionskosten zu optimieren.

Erfindungsgemäß wird dies mit den Merkmalen des Patentanspruches 1 gelöst. Vorteilhafte Weiterbildungen sind den Unteransprüchen zu entnehmen.

Gekennzeichnet ist die Absorptions- oder Diffusionsabsorptionswärmepumpe dadurch, dass dem Kocher im Kälte- oder Lösungsmittelkreislauf ein zusätzlicher Kondensator nachgeschaltet ist. Ausgehend von diesem zusätzlichen Kondensator ist der Kälte- oder Lösungsmittelkreislauf über eine Bypassleitung mit der Eintrittsseite des Kochers verbunden. Alternativ dazu kann der zusätzliche Kondensator direkt in der Bypassleitung zwischen Austritts- und Eintrittsseite des Kochers angeordnet sein.

Der zusätzliche Kondensator befindet sich im Kälte- oder Lösungsmittelkreislauf in einem Abschnitt mit relativ hohen Temperaturen, in der Regel im Bereich von 140 bis 170°C. Daher dient er als Wärmeübertrager zur Auskopplung von Wärme für einen Heizkreislauf. Nicht verdampftes und am zusätzlichen Kondensator kondensiertes Kälte- oder Lösungsmittel wird somit dem Kälte- oder Lösungsmittelkreislauf nach dem Kocher entzogen und über die Bypassleitung dem Kocher auf der Eintrittsseite wieder zugeführt. Daher liegt beim Betrieb des zusätzlichen Kondensators und der Bypassleitung durch den geringeren Anteil an verdampftem Kälte- oder Lösungsmittel im Kälte- oder Lösungsmittelkreislauf am Ausgang des Absorbers eine geringere Konzentration des Kälte- oder Lösungsmittels vor. Andererseits kann möglicherweise auch gleichzeitig die Konzentration des Kälte- oder Lösungsmittels auf der Eingangsseite des Kochers, nach der Einmündung der Bypassleitung, ansteigen.

Die thermische Leistung des Kochers, und somit auch die Kochertemperatur, ist einstellbar und regelbar. Der variable thermische Leistungsanteil des Kochers wird über den zusätzlichen Kondensator aus dem Kälte- oder Lösungsmittelkreislauf abgezogen, während der übrige Anlagenteil mit Rektifikator, Kondensator für Ammoniakdampf, Verdampfer und Absorber im stationären Betrieb mit etwa konstanten Temperaturen auf dem bekannten Temperaturniveau arbeitet. Bis etwa 80 Prozent der thermischen Leistung des Kochers werden über den zusätzlichen Kondensator aus dem Kälte- oder Lösungsmittelkreislauf abgezogen. Vorzugsweise ist die Durchflussmenge in der Bypassleitung zwischen der Austrittsseite und der Eintrittsseite des Kochers regelbar.

Die Wärmeübertragung vom zusätzlichen Kondensator erfolgt auf einen Heizkreislauf mit dem aufzuheizenden Medium, vorzugsweise Wasser als Brauchwasser, welcher in einer ersten Variante direkt durch einen eingebundenen Warmwasserspeicher, insbesondere einen Schichtenspeicher, geführt ist. Dadurch wird ein einfacher Aufbau ohne ein Zwischenmedium bzw. ein Zwischenkreislauf realisiert.

Die Wärmeübertragung vom zusätzlichen Kondensator auf einen Heizkreislauf erfolgt über einen zwischengeschalteten Kreislauf mit einem flüssigen oder gasförmigen Medium, wobei im zusätzlichen Kondensator ein flüssiges Medium, vorzugsweise Wasser, siedet und im Wärmeübertrager für den Heizkreislauf wieder kondensiert. Dieses Sieden und Kondensieren führt zu einer sehr guten Wärmeübertragung. Daher sind auf der Hochdruckseite nur relativ kleine Oberflächen zur Wärmeübertragung erforderlich, beispielsweise ein einfacher Rohr-in-Rohr-Wärmeübertrager. Im zwischengeschalteten Kreislauf kann ein Druckreduzierventil eingebaut sein, beispielsweise um den Absolutdruck auf ein Maximum von etwa 1 bar zu begrenzen und am Wärmeübertrager für den Heizkreislauf eine Temperatur von etwa 100 °C sicherzustellen. Mit dem Variieren des Druckes lassen sich auch andere Temperaturen für den Heizkreislauf einstellen.

Als Alternative dazu kann im zwischengeschalteten Kreislauf auch ein nach der Temperatur des Kochers geregeltes Ventil eingebaut sein, wobei die Temperatur des Kochers und/oder die Temperatur des Kälte- oder Lösungsmittelkreislaufes an der Eintrittsseite des Kochers für die Regelung maßgebend ist. Die Temperatur des Kochers und/oder die Temperatur des Kälte- oder Lösungsmittelkreislaufes an der Eintrittsseite des Kochers wird vorzugsweise auf einen Sollwert von etwa 130 °C geregelt. Dabei nimmt die Wärmeübertragung an den Heizkreislauf mit steigender thermischer Leistung des Kochers und somit steigender Kochertemperatur ebenfalls zu und es öffnet sich dann das im zwischengeschalteten Kreislauf befindliche Ventil entsprechend weiter.

Weiterhin kann die Temperatur des Kochers und/oder die Temperatur des Kälte- oder Lösungsmittelkreislaufes nach der Menge des nicht verdampften Kälte- oder Lösungsmittels geregelt werden. Dazu wird die Menge nach dem Verdampfer erfasst. Außerdem ist eine Regelung der Temperatur des Kochers und/oder der Temperatur des Kälte- oder Lösungsmittelkreislaufes nach dem Systemdruck möglich. Dabei wird über den Systemdruck erfasst, wenn das System mehr Kälte- oder Lösungsmittel verdampft als für den Absorptionsprozess im Absorber erforderlich ist.

Mit dem erfindungsgemäßen Aufbau wird eine gasbeheizte Absorptions- oder Diffusionsabsorptionswärmepumpe so optimiert, dass Vorlauftemperaturen auf einem für Heizungsanlagen üblichen Temperaturniveau erreicht werden. Dadurch kann in einem Heizsystem ein ergänzendes Heizgerät zur Spitzenlastabdeckung und/oder zur Warmwasserbereitung entfallen. Dies senkt den Bauaufwand und somit die Investitionskosten für Heizsysteme mit einer gasbeheizten Absorptions- oder Diffusionsabsorptionswärmepumpenanlage erheblich. Der maximal zulässige Systemdruck und die maximal zulässigen Kochertemperaturen werden weiterhin eingehalten, so dass der bekannte Anlagenteil mit Rektifikator, Kondensator für Ammoniakdampf, Verdampfer und Absorber, insbesondere im Hinblick auf Bauteilgestaltung und Auslegung, beibehalten werden kann. Der Betrieb ist sogar noch optimaler, denn wegen der Energieentnahme aus dem Kreisprozess an einer Stelle mit einer relativ hohen Temperatur ergibt sich eine niedrigere NH₃-Gasproduktion, eine Drucksenkung im System und dadurch eine bessere Absorption, weil das Verhältnis von NH₃ zu Wasser günstiger ist. Zudem ändert sich die NH₃-Konzentration in vorteilhafter Weise an der Eintrittsseite des Kochers.

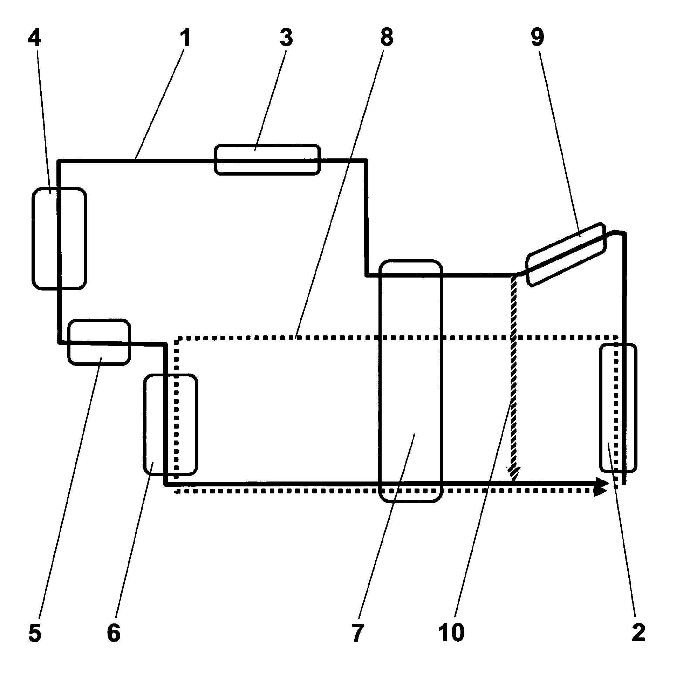

Die Zeichnung stellt ein Ausführungsbeispiel der Erfindung dar und zeigt in einer einzigen Figur den schematischen Aufbau einer Diffusionsabsorptionswärmepumpe.

Die Diffusionsabsorptionswärmepumpe besteht im Wesentlichen aus einem Kälte- oder Lösungsmittelkreislauf 1, einem Kocher 2, einem Kondensator 3 für Ammoniakdampf, einem Verdampfer 4, einem Gas-Gas-Wärmetauscher 5, einem Absorber 6, einem Rektifikator 7 sowie einem Wasserkreislauf 8.

Ein zusätzlicher Kondensator 9 ist im Kälte- oder Lösungsmittelkreislauf 1 hinter dem Kocher 2 eingebaut und dient als Wärmeübertrager für einen nicht dargestellten Heizkreislauf. Eine Bypassleitung 10 verbindet die Austrittsseite mit der Eintrittsseite des Kochers 2.

## Patentansprüche

1. Absorptions- oder Diffusionsabsorptionswärmepumpe mit einem Kälte- oder Lösungsmittelkreislauf (1), insbesondere unter Verwendung eines Stoffpaares mit Ammoniak (NH₃) als Kältemittel und Wasser als Lösungsmittel, einem Kondensator (3) für Ammoniakdampf, einem Verdampfer (4) sowie einem Absorber (6),
**dadurch gekennzeichnet, dass** dem Kocher (2) im Kälte- oder Lösungsmittelkreislauf (1) ein zusätzlicher Kondensator (9) nachgeschaltet ist.

2. Absorptions- oder Diffusionsabsorptionswärmepumpe nach Anspruch 1,
**dadurch gekennzeichnet, dass** der Kälte- oder Lösungsmittelkreislauf (1), ausgehend vom zusätzlichen Kondensator (9), über eine Bypassleitung (10) mit der Eintrittsseite des Kochers (2) verbunden ist.

3. Absorptions- oder Diffusionsabsorptionswärmepumpe nach Anspruch 1,
**dadurch gekennzeichnet, dass** der zusätzliche Kondensator (9) in einer Bypassleitung (10) im Kälte- oder Lösungsmittelkreislauf (1) angeordnet ist, welche die Austrittsseite mit der Eintrittsseite des Kochers (2) verbindet.

4. Absorptions- oder Diffusionsabsorptionswärmepumpe nach einem der Ansprüche 1 bis 3,
**dadurch gekennzeichnet, dass** der zusätzliche Kondensator (9) als Wärmeübertrager für einen Heizkreislauf dient.

5. Absorptions- oder Diffusionsabsorptionswärmepumpe nach einem der Ansprüche 1 bis 4,
**dadurch gekennzeichnet, dass** nicht verdampftes und am zusätzlichen Kondensator (9) kondensiertes Kälte- oder Lösungsmittel dem Kälte- oder Lösungsmittelkreislauf (1) nach dem Kocher entzogen und über die Bypassleitung (10) dem Kocher (2) auf der Eintrittsseite zugeführt wird.

6. Absorptions- oder Diffusionsabsorptionswärmepumpe nach einem der Ansprüche 1 bis 5,
**dadurch gekennzeichnet, dass** beim Betrieb des zusätzlichen Kondensators (9) und der Bypassleitung (10) durch den geringeren Anteil an verdampftem Kälte- oder Lösungsmittel im Kälte- oder Lösungsmittelkreislauf (1) am Ausgang des Absorbers (6) eine geringere Konzentration des Kälte- oder Lösungsmittels vorliegt.

7. Absorptions- oder Diffusionsabsorptionswärmepumpe nach einem der Ansprüche 1 bis 6,
**dadurch gekennzeichnet, dass** die thermische Leistung des Kochers (2), und somit die Kochertemperatur, einstellbar und regelbar ist.

8. Absorptions- oder Diffusionsabsorptionswärmepumpe nach einem der Ansprüche 1 bis 7,
**dadurch gekennzeichnet, dass** der variable thermische Leistungsanteil des Kochers (2) über den zusätzlichen Kondensator (9) aus dem Kälte- oder Lösungsmittelkreislauf (1) abgezogen wird und dass der übrige Anlagenteil mit Rektifikator (7), Kondensator (3) für Ammoniakdampf, Verdampfer (4) und Absorber (6) im stationären Betrieb mit etwa konstanten Temperaturen arbeitet.

9. Absorptions- oder Diffusionsabsorptionswärmepumpe nach einem der Ansprüche 1 bis 8,
**dadurch gekennzeichnet, dass** bis etwa 80 Prozent der thermischen Leistung des Kochers (2) über den zusätzlichen Kondensator (9) aus dem Kälte- oder Lösungsmittelkreislauf (1) abgezogen werden.

10. Absorptions- oder Diffusionsabsorptionswärmepumpe nach einem der Ansprüche 1 bis 9,
**dadurch gekennzeichnet, dass** die Durchflussmenge in der Bypassleitung (10) zwischen der Austrittsseite und der Eintrittsseite des Kochers (2) regelbar ist.

11. Absorptions- oder Diffusionsabsorptionswärmepumpe nach einem der Ansprüche 1 bis 10,
**dadurch gekennzeichnet, dass** die Wärmeübertragung vom zusätzlichen Kondensator (9) auf einen Heizkreislauf mit dem aufzuheizenden Warmwasser erfolgt, welcher direkt durch einen eingebundenen Warmwasserspeicher, insbesondere einen Schichtenspeicher, geführt ist.

12. Absorptions- oder Diffusionsabsorptionswärmepumpe nach einem der Ansprüche 1 bis 11,
**dadurch gekennzeichnet, dass** die Wärmeübertragung vom zusätzlichen Kondensator (9) auf einen Heizkreislauf über einen zwischengeschalteten Kreislauf mit einem flüssigen oder gasförmigen Medium erfolgt, wobei im zusätzlichen Kondensator (9) das flüssige Medium siedet und im Wärmeübertrager für den Heizkreislauf wieder kondensiert.

13. Absorptions- oder Diffusionsabsorptionswärmepumpe nach einem der Ansprüche 1 bis 11,
**dadurch gekennzeichnet, dass** im zwischengeschalteten Kreislauf ein Druckreduzierventil eingebaut ist, um den Absolutdruck auf ein Maximum von etwa 1 bar zu begrenzen und am Wärmeübertrager für den Heizkreislauf eine Temperatur von etwa 100 °C sicherzustellen.

14. Absorptions- oder Diffusionsabsorptionswärmepumpe nach einem der Ansprüche 1 bis 13,
**dadurch gekennzeichnet, dass** im zwischengeschalteten Kreislauf ein nach der Temperatur des Kochers (2) geregeltes Ventil eingebaut ist, wobei die Temperatur des Kochers (2) und/oder die Temperatur des Kälte- oder Lösungsmittelkreislaufes (1) an der Eintrittsseite des Kochers (2) für die Regelung maßgebend ist.

15. Absorptions- oder Diffusionsabsorptionswärmepumpe nach einem der Ansprüche 1 bis 14,
**dadurch gekennzeichnet, dass** die Temperatur des Kochers (2) und/oder die Temperatur des Kälte- oder Lösungsmittelkreislaufes (1) an der Eintrittsseite des Kochers (2) auf einen Sollwert von etwa 130 °C geregelt wird, wobei die Wärmeübertragung an den Heizkreislauf mit steigender thermischer Leistung des Kochers (2) und somit steigender Kochertemperatur ebenfalls ansteigt und wobei sich dann das im zwischengeschalteten Kreislauf befindliche Ventil entsprechend weiter öffnet.

16. Absorptions- oder Diffusionsabsorptionswärmepumpe nach einem der Ansprüche 1 bis 15,
**dadurch gekennzeichnet, dass** die Temperatur des Kochers (2) und/oder die Temperatur des Kälte- oder Lösungsmittelkreislaufes (1) nach der Menge des nicht verdampften Kälte- oder Lösungsmittels geregelt wird, wobei diese Menge nach dem Verdampfer (4) erfasst wird.

17. Absorptions- oder Diffusionsabsorptionswärmepumpe nach einem der Ansprüche 1 bis 16,
**dadurch gekennzeichnet, dass** die Temperatur des Kochers (2) und/oder die Temperatur des Kälte- oder Lösungsmittelkreislaufes (1) nach dem Systemdruck geregelt wird, wobei über den Systemdruck erfasst wird, wenn das System mehr Kälte- oder Lösungsmittel verdampft als für den Absorptionsprozess im Absorber erforderlich ist.
